# EUROPÄISCHE PATENTANMELDUNG

(11) **EP 4 811 136 A1**
(43) Veröffentlichungstag der Anmeldung: **23.09.2026**
(21) Anmeldenummer: 26160240.3
(22) Anmeldetag: 24.02.2026
(51) Int. Cl.: G06F 11/14

(54) **VORRICHTUNG MIT EINER DATENSCHNITTSTELLE UND VERFAHREN ZUM AKTUALISIEREN EINES WIEDERHERSTELLUNGSPROGRAMMS DER VORRICHTUNG**

(30) Priorität: 20.03.2025 DE 102025110777
(71) Anmelder: ifm electronic gmbh, 45128 Essen (DE)
(72) Erfinder: Kohlmann, Klaus, 88213 Ravensburg (DE); Camacho, José, 88214 Ravensburg (DE); Freundl, Christoph, 88131 Lindau (DE); Ege, Christian, 88677 Markdorf (DE)
(74) Vertreter: Ifm Patentabteilung

(57) **Zusammenfassung**

Es wird ein Verfahren zum Aktualisieren eines in einem ersten Speicherbereich (31-1) eines nicht-flüchtigen ersten Datenspeichers (31) hinterlegten ersten Wiederherstellungsprogramms (71) einer Vorrichtung (1) mit einer Datenschnittstelle (11) angegeben. Das Verfahren umfassend:
- einen Schritt S1 zum Ausführen des ersten Wiederherstellungsprogramms (71);
- einen Schritt S3 zum Empfangen eines Updates des ersten Wiederherstellungsprogramms (71) über die Datenschnittstelle (11) der Vorrichtung (1) mittels des ersten Wiederherstellungsprogramms (71);
- einen Schritt S5 zum Aktualisieren des ersten Wiederherstellungsprogramms (71), umfassend das Installieren des Updates in den ersten Speicherbereich (31-1);
- einen Schritt S7 zum Überprüfen eines Erfolgs der Aktualisierung des ersten Wiederherstellungsprogramms (71);
- einen Schritt S9 zum Ausführen eines in einem fünften Speicherbereich (41-5) eines zweiten Datenspeichers (41) hinterlegten zweiten

Wiederherstellungsprogramms (73) zur Aktualisierung oder Wiederherstellung des ersten Wiederherstellungsprogramms (71), falls die Überprüfung ergibt, dass die Aktualisierung mittels des ersten Wiederherstellungsprogramms (71) nicht erfolgreich war.

## Beschreibung

Die Erfindung betrifft ein Verfahren zum Aktualisieren eines Wiederherstellungsprogramms einer Vorrichtung mit einer Datenschnittstelle, sowie eine entsprechende Vorrichtung, wie beispielsweise ein Feldgerät, loT-Gerät oder ein eingebettetes System.

Vorrichtungen der oben genannten Art werden beispielsweise in der Automatisierungstechnik, in der Robotik oder in führerlosen Fahrzeugen verwendet. Zum Sicherstellen der Sicherheit und Integrität solcher Vorrichtungen ist es oft notwendig in einem Datenspeicher hinterlegte ausführbare Computerprogramme aktualisieren zu können. Dies kann zum einen die Firmware der Vorrichtung, welche die eigentlichen Steuer- oder Regelprogramme umfasst, und zum anderen auch Wiederherstellungsprogramme betreffen, welche zum Aktualisieren und/oder Wiederherstellen der Firmware verwendet werden. Dabei muss sichergestellt werden, dass ein Fehler beim Durchführen einer Aktualisierung mittels des Wiederherstellungsprogramms nicht dazu führt, dass die Vorrichtung funktionsunfähig wird. Ferner muss sichergestellt werden, dass eine entsprechende Berechtigung (eines Nutzers, eines Computerprogramms oder Gerätes) vorliegt, welche das Ausführen des Aktualisierungs- oder Wiederherstellungsprozesses erlaubt. In einem weiteren Aspekt kann es vorteilhaft sein, die Integrität eines aktualisierten Wiederherstellungsprogramms vor und/oder nach der Installation auf der Vorrichtung zu überprüfen.

Aufgabe der Erfindung ist es eine Vorrichtung mit einer Datenschnittstelle, welche hohe Anforderungen an die Sicherheit erfüllt, und ein Verfahren zum Betreiben einer Vorrichtung anzugeben, welches ein sicheres Betreiben der Vorrichtung und eine sichere Aktualisierung eines Wiederherstellungsprogramms der Vorrichtung ermöglicht.

Die Aufgabe wird durch ein Verfahren nach Anspruch 1 und eine Vorrichtung nach Anspruch 8 gelöst. Vorteilhafte Ausgestaltungen der Erfindung sind in den abhängigen Ansprüchen angegeben.

Vorteilhaft ist Verfahren zum Aktualisieren eines in einem ersten Speicherbereichs eines nicht-flüchtigen ersten Datenspeichers hinterlegten ersten Wiederherstellungsprogramms einer Vorrichtung mit einer Datenschnittstelle angegeben, das Verfahren umfassend:
- einen Schritt S1 zum Ausführen des ersten Wiederherstellungsprogramms;
- einen Schritt S3 zum Empfangen eines Updates des ersten Wiederherstellungsprogramms über die Datenschnittstelle der Vorrichtung mittels des ersten Wiederherstellungsprogramms;
- einen Schritt S5 zum Aktualisieren des ersten Wiederherstellungsprogramms, umfassend das Installieren des Updates in den ersten Speicherbereich;
- einen Schritt S7 zum Überprüfen eines Erfolgs der Aktualisierung des ersten Wiederherstellungsprogramms;
- einen Schritt S9 zum Ausführen eines in einem fünften Speicherbereich eines zweiten Datenspeichers hinterlegten zweiten Wiederherstellungsprogramms zur Aktualisierung oder Wiederherstellung des ersten Wiederherstellungsprogramms, falls die Überprüfung ergibt, dass die Aktualisierung mittels des ersten Wiederherstellungsprogramms nicht erfolgreich war.

Somit kann ein Verfahren bereitgestellt werden, mittels dessen ein hohes Sicherheitsniveau der Vorrichtung erreicht und ein Ausfall der Vorrichtung auch bei fehlgeschlagener Aktualisierung des ersten Wiederherstellungsprogramms verhindert werden kann. Eine fehlgeschlagene Aktualisierung kann beispielsweise aufgrund eines Ausfalls der Energieversorgung während einer Aktualisierung des ersten Wiederherstellungsprogramms, aufgrund defekter Speicherbereiche, oder aufgrund eines fehlerhaften Programmcodes auftreten. Das Verfahren kann insbesondere als computerimplementiertes Verfahren ausgebildet sein. Im Rahmen des Verfahrens kann das erste Wiederherstellungsprogramm vollständig oder teilweise aktualisiert werden. Es kann also vorgesehen sein, dass das erste Wiederherstellungsprogramm vollständig oder teilweise als Update über die Datenschnittstelle gesendet und empfangen, sowie anschließend installiert wird. Das Installieren kann insbesondere das Schreiben von Programmdaten, sowie das Konfigurieren des aktualisierten ersten Wiederherstellungsprogramms umfassen.

Der erste Speicher kann beispielsweise ein für den Betrieb der Vorrichtung /das Ausführen der Firmware optimierter Speicher, beispielsweise ein NAND-Flashspeicher oder eine eMMC (von englisch: "embedded MultiMediaCard") sein. Die Verwendung einer eMMC als erster Datenspeicher kann insbesondere vorteilhaft während der Herstellung der Vorrichtung sein (z.B. aufgrund der vergleichsweisen einfachen Bestückung einer Leiterplatte mit der eMMC). Ferner kann eine eMMC vorteilhaft hinsichtlich des Programmieraufwandes sein, da bei einer eMMC unterschiedliche Funktionen, wie ein Wear-Leveling bereitgestellt werden. Weitere Vorteile betreffen beispielsweise weitere Aspekte der Speicherverwaltung, wie das blockweise Löschen/Überschreiben von Speicherbereichen der NAND-Flashspeicher.

Der zweite Datenspeicher kann insbesondere hinsichtlich der Volatilität des Speichers optimiert sein und eine geringe Degradierung der gespeicherten Daten aufweisen. Beispielswiese ist der zweite Datenspeicher ein NOR-Flashspeicher.

Vorzugsweise ist es in dem Verfahren vorgesehen, dass dann, wenn im Schritt S7 festgestellt wurde, dass die Aktualisierung nicht erfolgreich war, vor dem Schritt S9 zum Ausführen des zweiten Wiederherstellungsprogramms zuerst versucht wird, die Schritte S1, S3, S5 und S7 erneut auszuführen. Es wird also vorteilhaft erneut versucht das erste Wiederherstellungsprogramm auszuführen. Falls das erste Wiederherstellungsprogramm ausführbar ist, wird entsprechend erneut versucht dieses zu aktualisieren. Der Schritt S9 wird in dieser Ausgestaltung des Verfahrens nur in dem Fall ausgeführt, wenn die Aktualisierung wiederholt fehlgeschlagen ist. Beispielsweise wenn im Schritt S9 wiederholt festgestellt wird, dass die Aktualisierung nicht erfolgreich war oder wenn das erste Wiederherstellungsprogramm nicht oder nicht mehr ausführbar ist.

Vorteilhaft wird die Vorrichtung nach einer Aktualisierung des ersten Wiederherstellungsprogramms neugestartet, wobei das Neustarten das Ausführen eines in einem vierten Speicherbereich des zweiten Datenspeichers hinterlegten Bootloaders umfasst. Durch das Hinterlegen des Bootloaders in dem vierten Speicherbereich kann die Degradierung der Programmdaten des Bootloaders minimiert und die Robustheit der Vorrichtung erhöht werden.

Vorteilhaft umfasst das Verfahren auch das Lesen einer in einem dritten Speicherbereich des ersten Datenspeichers hinterlegten dynamischen Netzwerkadresse zur Authentifizierung in einem Netzwerk. Somit kann die Vorrichtung leicht in einem Netzwerk eingebunden und über die Datenschnittstelle angesprochen werden. Insbesondere kann somit auch leicht eine Aktualisierung der Firmware und/oder des ersten Wiederherstellungsprogramms über die Datenschnittstelle angestoßen, beziehungsweise durchgeführt werden.

Zum Ausführen des in dem fünften Speicherbereich hinterlegten zweiten Wiederherstellungsprogramms wird vorzugsweise eine in einem sechsten Speicherbereich des zweiten Datenspeichers hinterlegte statische Netzwerkadresse ausgelesen und zur Adressierung der Vorrichtung über die Datenschnittstelle verwendet. Die Vorrichtung kann dann mittels der statischen Netzwerkadresse adressiert und das Ausführen des zweiten Wiederherstellungsprogramms angestoßen werden. Das Ausführen des zweiten Wiederherstellungsprogramms über eine andere Adressierung der Vorrichtung wird dabei vorteilhaft unterbunden. Somit kann die Sicherheit weiter erhöht und insbesondere das Ausführen des zweiten Wiederherstellungsprogramms durch unberechtigte erschwert oder verhindert werden. Insbesondere kann so das Installieren des Updates des ersten Wiederherstellungsprogramms durch Unberechtigte erschwert oder verhindert werden.

Vorteilhaft wird der Datenaustausch über die Datenschnittstelle mittels einer verschlüsselten Verbindung durchgeführt. Vorzugsweise umfasst das Verfahren daher den Aufbau einer verschlüsselten Datenverbindung über die Datenschnittstelle, wobei in dem sechsten Datenspeicher hinterlegte Verschlüsselungsdaten durch die Vorrichtung ausgelesen und zum Aufbau der verschlüsselten Datenverbindung verwendet werden.

Alternativ oder zusätzlich kann es in dem Verfahren vorgesehen sein das Update des ersten Wiederherstellungsprogramm zu verschlüsseln und das verschlüsselte Update über die Datenschnittstelle an die Vorrichtung zu übertragen. Nach dem Empfangen des Updates des ersten Wiederherstellungsprogramms durch die Vorrichtung kann dieses mittels des ersten Wiederherstellungsprogramms oder mittels des zweiten Wiederherstellungsprogramms entschlüsselt und nachfolgend installiert werden.

In einem weiteren Aspekt des Verfahrens wird die Sicherheit dadurch erhöht, dass die Integrität der über die Datenschnittstelle empfangenen Daten geprüft wird.

Vorzugsweise ist es in dem Verfahren daher vorgesehen die Integrität des im Schritt S3 empfangenen Updates zur Aktualisierung des ersten Wiederherstellungsprogramms zu überprüfen, beziehungsweise zu verifizieren. Zu diesem Zweck ist es vorteilhaft vorgesehen Integritätsdaten aus dem sechsten Speicherbereich zu lesen und die Integrität des Updates auf Basis der Integritätsdaten zu überprüfen. Die Überprüfung der Integrität erfolgt vorteilhaft vor der Installation des Updates in den ersten Speicherbereich und kann beispielsweise das Überprüfen oder Vergleichen von Signaturdaten oder Hash-Werten umfassen.

In manchen Ausgestaltungen des Verfahrens ist es vorgesehen, dass zwei oder mehr Vorrichtungen 1 parallel aktualisiert werden. Beispielsweise können mehrere Vorrichtungen in Vorrichtungsgruppen zusammengefasst werden. Eine entsprechende Gruppen-ID kann jeweils in einem der Speicherbereiche, beispielsweise in dem zweiten Teilbereich 31-3b des dritten Speicherbereichs 31-3 und/oder in einer Zentraleinheit oder in einer anderen externen Einheit hinterlegt werden. Mittels der Gruppen-ID kann dann eine Vielzahl an Vorrichtungen über die jeweilige Datenschnittstelle kontaktiert und jeweils ein Update des ersten Wiederherstellungsprogramms gesendet und die Aktualisierung jeweils angestoßen werden. Als externe Einheit kann beispielsweise eine ethernetfähige Netzwerkkomponente wie die Komponente "QHA210" und/oder eine Einheit umfassend die loT-Applikation "moneo" der Anmelderin verwendet werden.

Um das an die Vorrichtung zu übermittelnde Datenvolumen gering zu halten, kann es in manchen Ausgestaltungen des Verfahrens vorgesehen sein, dass das Update des ersten Wiederherstellungsprogramm dieses nicht vollständig durch eine aktualisierte Version ersetzt. Das Update kann das erste Wiederherstellungsprogramm somit vollständig ersetzen oder auf Teile des ersten Wiederherstellungsprogramms beschränkt sein. Das Update kann beispielsweise in Form wenigstens einer Image-Datei von einer externen Einheit an die Vorrichtung übertragen werden.

In einem weiteren Aspekt der Erfindung wird eine Vorrichtung umfassend eine Datenschnittstelle, eine Steuerschaltung mit einer Recheneinheit, einen ersten nicht-flüchtigen Datenspeicher und einen zweiten nicht-flüchtigen Datenspeicher angegeben, wobei der erste Datenspeicher einen ersten Speicherbereich und einen zweiten Speicherbereich umfasst, und wobei der zweite Datenspeicher (41) einen fünften Speicherbereich umfasst; wobei
- in dem ersten Speicherbereich ein ausführbares erstes Wiederherstellungsprogramm hinterlegt ist;
- in dem zweiten Speicherbereich eine ausführbare Firmware zum Betreiben der Vorrichtung hinterlegt ist;
- in dem fünften Speicherbereich ein zweites Wiederherstellungsprogramm hinterlegt ist;
und wobei die Vorrichtung dazu ausgebildet und eingerichtet ist zum Aktualisieren des ersten Wiederherstellungsprogramms ein Update des ersten Wiederherstellungsprogramms über die Datenschnittstelle zu empfangen, in den ersten Datenspeicher zu installieren und einen Erfolg des Updates zu überprüfen, sowie das zweite Wiederherstellungsprogramm zum Wiederherstellen oder Aktualisieren des ersten Wiederherstellungsprogramms auszuführen, falls die Überprüfung ergibt, dass das Update nicht erfolgreich war.

Somit kann eine Vorrichtung bereitgestellt werden, deren Firmware und deren erstes Wiederherstellungsprogramm leicht aktualisiert werden können and das gut gegen einen Ausfall aufgrund einer fehlgeschlagenen Aktualisierung oder aufgrund korrupter Daten des ersten Datenspeichers oder des Updates geschützt ist. Das Update kann das erste Wiederherstellungsprogramm im Rahmen der Aktualisierung vollständig oder teilweise ersetzen. Insbesondere kann auch eine Wiederherstellung des ersten Wiederherstellungsprogramms ermöglicht werden, falls dieses nach einer fehlgeschlagenen Aktualisierung oder aufgrund eines Defektes des ersten Datenspeichers nicht mehr ausführbar ist.

Die Vorrichtung kann insbesondere als ein Feldgerät, loT-Gerät oder eingebettetes System ausgebildet sein. Insbesondere können Ausgestaltungen als Sensor, Aktuator, oder als eine Netzwerkkomponente zum Vernetzen von Sensoren oder Aktuatoren vorgesehen sein, beispielsweise in einem Prozessautomatisierungs- oder industriellem Fertigungssystem. Das eingebettete System oder loT-Gerät kann insbesondere als Teil eines automatisch geführten Fahrzeugs (AGV, von englisch "Automated Guided Vehicle") oder eines Autonomen Mobilen Roboters (AMR) ausgebildet sein.

Die Datenschnittstelle kann sowohl eine drahtlose, also auch eine drahtgebundene Schnittstelle umfassen. Vorteilhaft kann die Datenschnittstelle zur Kommunikation über ein Netzwerk, einen Daten-Bus oder ein Internet der Dinge (IoT, von englisch "Internet-of-Things) ausgebildet sein. Es kann also vorgesehen sein, dass die Aktualisierung des ersten Wiederherstellungsprogramms über eine Cloud-Anwendung, ein Netzwerk oder ein Internet der Dinge angestoßen wird, beziehungsweise das Update darüber übertragen wird. Alternativ oder zusätzlich kann die Datenschnittstelle zum Empfang des Updates und gegebenenfalls anderer Daten von einem Speichermedium, wie eines USB-Datenträgers ausgebildet sein.

Vorzugsweise umfasst der zweite Datenspeicher einen vierten Speicherbereich, in welchem ein Bootloader zum Starten des ersten Wiederherstellungsprogramm, des zweiten Wiederherstellungsprogramms, und der Firmware hinterlegt ist. Somit kann der Bootloader durch eine geeignete Wahl des zweiten Datenspeichers gut gegen die Degradierung der Programmdaten geschützt werden.

Der zweite Datenspeicher umfasst vorzugsweise einen sechsten Speicherbereich, welcher durch einen Anwender nicht veränderlich ist. In dem sechsten Speicherbereich sind dann vorteilhaft wenigstens eine der folgenden Daten hinterlegt: Integritätsdaten zum Überprüfen der Integrität des Updates, Verschlüsselungsdaten zum Verschlüsseln der Kommunikation über die Datenschnittstelle, wenigstens ein statischer Adressparameter zur Adressierung der Vorrichtung. Die Integritätsdaten umfassen beispielsweise Hashwerte oder Signaturdaten. Zum Verschlüsseln der Daten können diese direkt verschlüsselt werden und/oder ein verschlüsselter Kommunikationskanal aufgebbaut werden.

Vorzugsweise umfasst der erste Datenspeicher einen dritten Speicherbereich, wobei die Vorrichtung dazu ausgebildet und eingerichtet Kommunikationsdaten in dem dritten Speicherbereich zu hinterlegen und auszulesen. Die Kommunikationsdaten können insbesondere eine dynamische Netzwerkadresse, wie eine dynamisch erzeugte IP-Adresse umfassen. Insbesondere können die Kommunikationsdaten zur Aktualisierung des ersten Wiederherstellungsprogramms verwendet werden.

Wie bereits erwähnt, umfasst der der erste Datenspeicher vorzugsweise einen NAND-Datenspeicher, besonders bevorzugt einen eMMC-Datenspeicher. Der zweite Datenspeicher umfasst vorzugsweise einen NOR-Datenspeicher, besonders bevorzugt einen NOR-Flashspeicher.

Mittels der Speicherbereiche 31-1 bis 41-6 kann insgesamt eine Speicherstruktur bereitgestellt werden, welche hohe Anforderungen an die Sicherheit erfüllt. So können unterschiedliche Aspekte, wie Zugriffsrechte, Adressierung, Netzwerkanbindung, Degradierung, Verschlüsselung, Datenintegrität und/oder das Signieren und Verifizieren von Daten effizient gehandhabt werden.

Die Datenschnittstelle kann insbesondere eine IO-Link-Schnittstelle, Ethernet-Schnittstelle (z.B. nach dem Standard IEEE 802.3) und/oder eine WLAN-Schnittstelle (z.B. nach dem Standard IEEE-802.11) umfassen. Die Ethernet-Schnittstelle kann auch als Single Pair Ethernet (SPE)-Schnittstelle ausgebildet sein. Als Verbindungsprotokoll kann insbesondere wenigstens eines der folgenden Protokolle verwendet werden: HTTP, HTTPS, WebSocket, XMLR-RPC.

Die Vorrichtung kann insbesondere zum Durchführen eines oben beschriebenen Verfahrens ausgebildet und eingerichtet ist.

Nachfolgend wird die Erfindung anhand von Ausführungsbeispielen unter Bezugnahme auf die Zeichnungen näher erläutert.

Es zeigen schematisch:
- Figur 1: eine beispielhafte Ausgestaltung einer Vorrichtung mit einem ersten Datenspeicher und einem zweiten Datenspeicher;
- Figur 2: eine beispielhafte Ausgestaltung des ersten Datenspeichers und des zweiten Datenspeichers;
- Figur 3: eine beispielhafte Ausgestaltung eines Verfahrens zum Aktualisieren des ersten Wiederherstellungsprogramms;
- Figur 4: eine weitere beispielhafte Ausgestaltung des Verfahrens zum Aktualisieren des ersten Wiederherstellungsprogramms, und
- Figur 5: eine beispielhafte Weiterbildung des Verfahrens.

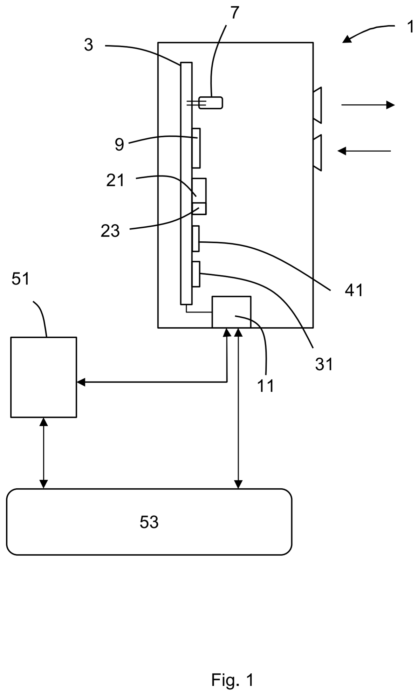

In der Figur 1 ist eine beispielhafte Ausgestaltung einer Vorrichtung als Feldgerät in schematischer Darstellung gezeigt. Das Feldgerät, beziehungsweise die Vorrichtung 1 ist exemplarisch als optischer Sensor mit einer auf einer Leiterplatte 3 angeordneten Steuerschaltung 5 ausgebildet. Auf der Leiterplatte 3 sind ferner eine Lichtsendeeinheit 7 zum Emittieren eines Sendelichts und ein Photodetektor 9 zur Detektion des an einem Objekt reflektierten Sendelichts angeordnet. Zur Steuerung und/oder Regelung der Vorrichtung 1, insbesondere der Lichtsendeeinheit 7 und des Photodetektors 9, ist eine Recheneinheit 21 vorgesehen, welche zum Datenaustausch mit einer externen Einheit 51 (z.B. einer externen Steuereinheit) mit einer Datenschnittstelle 11 der Vorrichtung 1 verbunden ist. Die Recheneinheit 21 umfasst einen flüchtigen Datenspeicher 23, wie einen RAM-Speicher. Ferner ist eine Verbindung mit einem Netzwerk oder einem Internet der Dinge (IoT, von englisch "Internet of Things") 53 dargestellt. Beispielsweise kann die externe Einheit 51 auch über das loT 53 oder innerhalb eines Netzwerkes mit der Vorrichtung 1 verbunden werden. Ferner sind ein erster Datenspeicher 31 und ein zweiter Datenspeicher 41 vorgesehen, welche mit der Recheneinheit 21 verbunden sind. Auf dem ersten Datenspeicher 31 und dem zweiten Datenspeicher 41 hinterlegte Computerprogramme können somit mittels der Recheneinheit 21 ausgeführt werden.

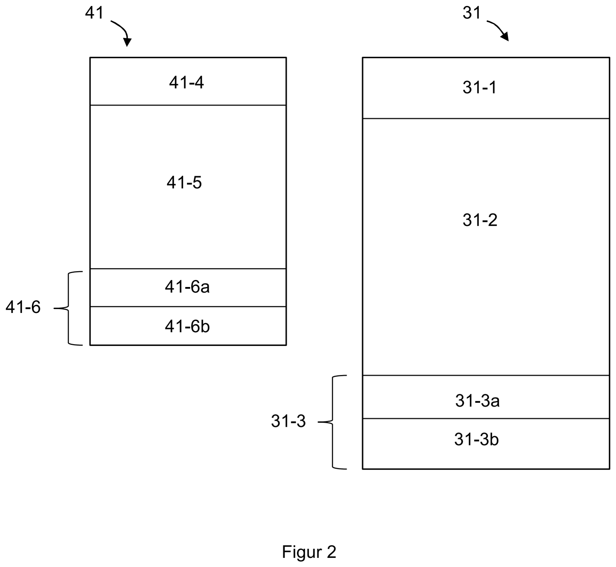

Eine beispielhafte Ausgestaltung des ersten Datenspeichers 31 und des zweiten Datenspeichers 41 ist schematisch in der Figur 2 dargestellt. Der erste Datenspeicher 31 umfasst im Beispiel einen ersten Speicherbereich 31-1, einen zweiten Speicherbereich 31-2 und einen dritten Speicherbereich 31-3. Der zweite Datenspeicher 41 umfasst in der gezeigten Ausgestaltung einen vierten Speicherbereich 41-4, einen fünften Speicherbereich 41-5 und einen sechsten Speicherbereich 41-6. Sowohl der erste Datenspeicher 31 als auch der zweite Datenspeicher 41 sind als nicht-flüchtige Datenspeicher ausgebildet. Die unterschiedlichen Speicherbereiche 31-1 bis 41-6 können jeweils als Partition des betreffenden Datenspeichers 31, 41 ausgebildet sen.

Der ersten Datenspeicher 31 ist beispielhaft als NAND-Flashspeicher, insbesondere als eMMC, und der zweite Datenspeicher 41 als NOR-Flashspeicher ausgebildet. Die Speicherbereiche 31-1 bis 41-6 sind beispielsweise als Partitionen des jeweiligen Datenspeichers 31, 41 ausgebildet.

Im ersten Speicherbereich 31-1 des ersten Datenspeichers 31 ist ein erstes Wiederherstellungsprogramm 71 hinterlegt. Der erste Speicherbereich 31-1 ist durch die Firmware 75 sowohl lesbar als auch schreibbar (read/write(RW)-Berechtigung).

Im zweiten Speicherbereich 31-2 ist eine Firmware 75 der Vorrichtung 1 hinterlegt ist. Die Firmware 75 umfasst insbesondere Steuer- und Regelsoftware zum Betreiben der Vorrichtung 1. Mittels des ersten Wiederherstellungsprogramms 71 kann die Firmware 75 aktualisiert und im Fehlerfall wiederhergestellt werden. Der zweite Speicherbereich ist für die Firmware 75 ebenfalls mit einer RW-Berechtigung versehen.

Im dritten Speicherbereich 31-3 können Konfigurationsparameter, Adressdaten, wie dynamisch zugewiesene Netzwerkadressen, oder andere Daten hinterlegt sein. Der dritte Speicherbereich 31-3 kann einen ersten Teilbereich 31-3a umfassen, welcher im Normalbetrieb durch einen Anwender, beziehungsweise durch die Firmware 75 lesbar und beschreibbar (RW-Berechtigung) ist. Somit können über ein Netzwerk zugewiesene Netzwerkadressen gespeichert und aktuell gehalten werden. Ferner können Logdateien oder Debuginformationen gespeichert werden. Der dritte Speicherbereich 31-3 kann auch einen zweiten Teilbereich 31-3b umfassen, welcher durch den Anwender, beziehungsweise durch die Firmware 75, im Normalbetrieb lediglich lesbar ist (read-only(RO)-Berechtigung). Dies kann beispielsweise vorteilhaft sein, um vorherbestimmte Parameter, wie Kalibrierparameter zu hinterlegen.

Im vierten Speicherbereich 41-4 kann insbesondere ein Bootloader 77 hinterlegt, mittels dessen die Firmware 75 der Vorrichtung 1 gestartet werden kann. Der vierte Speicherbereich ist vorteilhaftdurch durch die Firmware 75 nur lesbar eingerichtet (RO-Berechtigung).

Im fünften Speicherbereich 41-5 ist ein zweites Wiederherstellungsprogramm 73 hinterlegt. Ist das erste Wiederherstellungsprogramms 71 nicht ausführbar, kann das zweite Wiederherstellungsprogramm 73 gestartet und ausgeführt werden. Somit kann eine Redundanz in den Wiederherstellungsprogrammen 73, 75 erreicht werden. Der fünfte Speicherbereich ist für die Firmware 75 beispielsweise mit der Berechtigung "RO" versehen.

Im sechsten Speicherbereich 41-6 sind vorteilhaft sicherheitsrelevante Daten, wie Verschlüsselungsdaten, Daten zur Überprüfung der Datenintegrität, oder Adressparameter zur Adressierung der Vorrichtung 1 hinterlegt. Insbesondere kann eine statische Netzwerkadresse, wie eine statische IP-Adresse hinterlegt sein. Die statische Netzwerkadresse kann zum Durchführen eines Wiederherstellungsprozesses/einer Aktualisierung des ersten Wiederherstellungsprogramms mittels des zweiten Wiederherstellungsprogramms 73 verwendet werden. So kann es vorgesehen sein, dass ein Aufrufen/Starten des zweiten Wiederherstellungsprogramms 73 nur dann möglich ist, wenn die Vorrichtung 1 unter der statischen Netzwerkadresse kontaktiert wird. Somit kann ein nicht autorisierter Zugriff auf die Vorrichtung 1 erschwert oder verhindert werden. Der sechste Speicherbereich 41-6 ist beispielsweise für die Firmware 75 mit einer RO-Berechtigung versehen. Im Beispiel der Figur 2 umfasst der sechste Speicherbereich 41-6 zwei Teilbereiche 41-6a und 41-6b, wobei die statische Netzwerkadresse und gegebenenfalls weitere sicherheitsrelevante Daten in dem Teilbereich 41-6a hinterlegt sind. Der Teilbereich 41-6b kann beispielsweise zum Speichern weiterer Kalibrier- und Konfigurationsdaten verwendet werden, welche insbesondere während der Herstellung, der initialen Inbetriebnahme oder der Kalibrierung der Vorrichtung 1 hinterlegt werden können

Die Ausgestaltung des ersten Datenspeichers 31 als NAND-Flashspeicher hat den Vorteil, dass ein kostengünstiger und schneller Datenspeicher zum Hinterlegen der Firmware 75 und des ersten Wiederherstellungsprogramms 71 bereitgestellt werden kann. Die Ausgestaltung des zweiten Datenspeichers 41 als NOR-Flashspeicher/eMMC hat den Vorteil, dass ein beständiger Datenspeicher mit geringer Neigung zum Degradieren zum Hinterlegen des zweiten Wiederherstellungsprogramms 73 bereitgestellt werden kann.

Die gezeigte Speicherstruktur umfassend den ersten Datenspeicher 31 und den zweiten Datenspeicher 41 ermöglicht es somit eine Vorrichtung 1 bereitzustellen, welche vergleichsweise hohe Anforderungen an die Datensicherheit und Integrität erfüllt. Zum einen kann nicht nur die Firmware 75, sondern auch das erste Wiederherstellungsprogramm 71 aktualisiert werden. Dadurch können auch zum Zeitpunkt der Herstellung der Vorrichtung 1 unbekannte Sicherheitslücken nachträglich geschlossen oder zusätzliche Funktionen implementiert werden. Zum anderen ermöglicht die Speicherstruktur ein robustes System, welches auch im Fehlerfall mit Hilfe des zweiten Wiederherstellungsprogramms 73 wiederhergestellt werden kann.

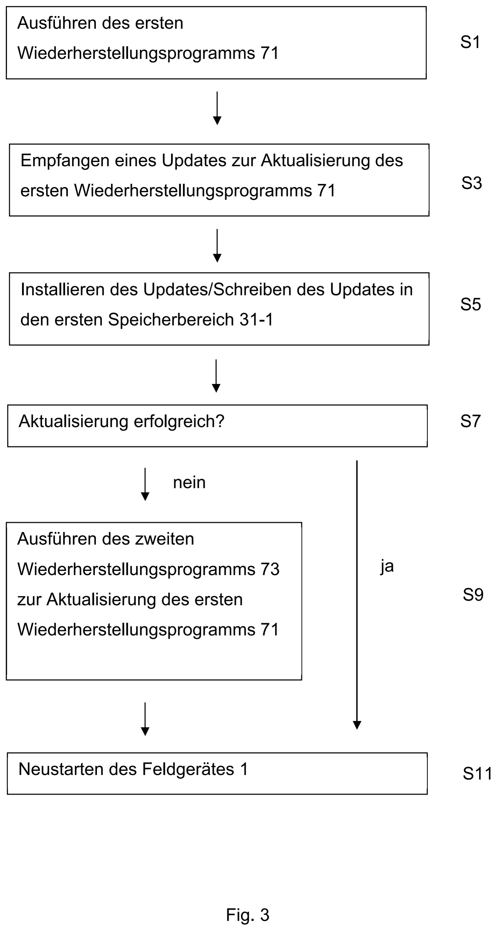

Die Figur 3 illustriert beispielhaft eine mögliche Ausgestaltung des erfindungsgemäßen Verfahrens. In einem ersten Schritt S1 wir das in dem ersten Speicherbereich hinterlegte erste Wiederherstellungsprogramm 71 gestartet und ausgeführt. Dieses kann zur Ausführung insbesondere in einen nicht-flüchtigen Datenspeicher, wie einen RAM-Speicher, geladen werden. In einem Schritt S3 wird eine Aktualisierung des ersten Wiederherstellungsprogramms 71 mittels des ersten Wiederherstellungsprogramms 71 initialisiert, wobei ein Update des ersten Wiederherstellungsprogramms 71 über die Datenschnittstelle 15 empfangen wird. Das Update des ersten Wiederherstellungsprogramm 71 kann dabei als vollständiges Programm gesendet und empfangen werden, oder lediglich zu aktualisierende Teile des ersten Wiederherstellungsprogramms 71 umfassen. Die Teile können beispielsweise in Form von Container oder anderen ausführbaren Programmmodulen vorliegen.

In einem folgenden Schritt S5 wird nun das Update des ersten Wiederherstellungsprogramms 71 in den ersten Speicherbereich 31-1 geschrieben, beziehungsweise in dem ersten Speicherbereich 31-1 installiert. Daraufhin wird in einem Schritt S7 überprüft, ob die Aktualisierung erfolgreich war. Dies kann das Vergleichen der geschriebenen Daten, beziehungsweise des installierten Updates oder des aktualisierten ersten Wiederherstellungsprogramms 71, mit einem Hash-Wert, und/oder das Ausführen des aktualisierten Wiederherstellungsprogramms 71 umfassen. Insbesondere kann es auch vorgesehen sein, die in dem zweiten Speicherbereich 31-2 hinterlegte Firmware der Vorrichtung 1 neu zu starten. Optional kann es auch vorgesehen sein das aktualisierte erste Wiederherstellungsprogramm 71 zur Überprüfung/Verifizierung des Erfolgs der Aktualisierung erneut auszuführen.

Falls die Überprüfung/Verifizierung des Erfolgs im Schritt S5 ergibt, dass die Aktualisierung nicht erfolgreich war, wird in einem Schritt S7 das in dem vierten Speicherbereich 41-4 hinterlegte zweite Wiederherstellungsprogramm 73 zur Aktualisierung des ersten Wiederherstellungsprogramms 71 ausgeführt. Mittels des zweiten Wiederherstellungsprogramms 73 kann wiederum das Update des ersten Wiederherstellungsprogramm 71 über die Datenschnittstelle 11 empfangen und anschließend in den ersten Speicherbereich 31-1 geschrieben, beziehungsweise installiert werden. Daraufhin kann wiederum der Erfolg überprüft werden. Falls die Aktualisierung erfolgreich war, kann die Vorrichtung 1/die Firmware 75 in einem Schritt S11 neu gestartet und gegebenenfalls ein Update der Firmware 75 durchgeführt werden. Anderenfalls kann es vorgesehen sein eine Fehlermeldung über die Datenschnittstelle 11 zu senden. Ebenso kann es dann vorgesehen sein, die Vorrichtung 1 in einen Wartungsmodus mit reduzierter Funktionalität zu versetzen oder das Ausführen der Firmware vollständig unterbinden.

Alternativ kann es auch vorgesehen sein, dass in dem Fall, dass die Überprüfung des Erfolgs im Schritt S5 ergibt, dass die Aktualisierung nicht erfolgreich war, zuerst erneut die Schritte S3, S5 und S7 ausgeführt werden. In solchen Ausgestaltungen wird der Schritt S9 zum Ausführen des zweiten Wiederherstellungsprogramms 73 nur dann ausgeführt, wenn wenigstens zwei Versuche der Aktualisierung des ersten Wiederherstellungsprogramms 71 durch das erste Wiederherstellungsprogramm 71 erfolglos waren, oder wenn das erste Wiederherstellungsprogramm 71 nicht mehr ausführbar ist.

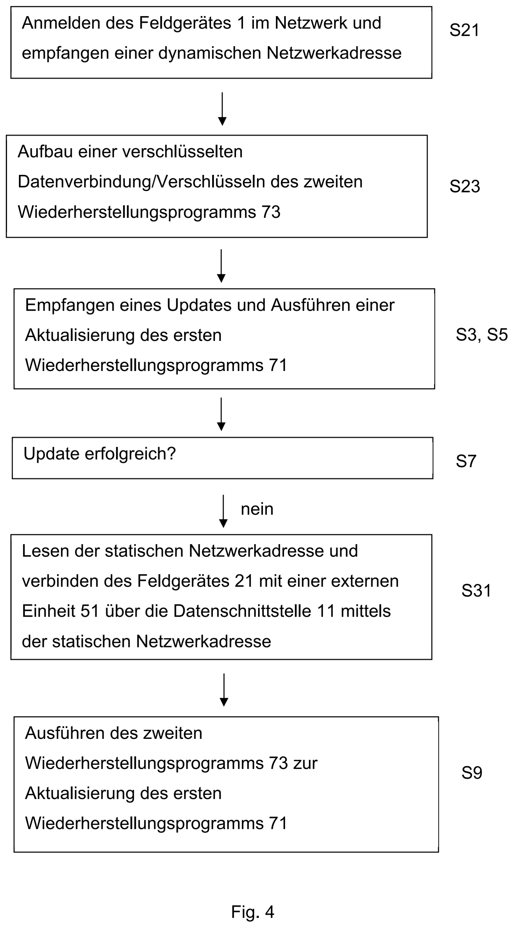

In der Figur 4 sind weitere Aspekte und mögliche Ausgestaltungen des Verfahrens skizziert. In einem Schritt S21 erfolgt die Anmeldung der Vorrichtung 1 in einem externen Netzwerk 17. Das Netzwerk 17 kann eine Vielzahl an Netzwerkteilnehmern oder auch nur eine einzige externe Einheit 51 zur Wartung der Vorrichtung 1 umfassen. In einem Schritt S23 kann daraufhin eine verschlüsselte Datenverbindung zwischen der Vorrichtung 1 und einer externen Einheit 51 aufgebaut werden. Alternativ oder zusätzlich kann es in dem Schritt S23 vorgesehen sein, das Update des ersten Wiederherstellungsprogramms 71 zu verschlüsseln, beispielsweise als Image-Datei, und verschlüsselt an die Vorrichtung zu senden. Die externe Einheit 51 kann beispielsweise einen PC, ein mobiles Endgerät, eine zentrale Steuereinheit oder eine Einheit eines Prozessautomatisierungssystems sein. Nach dem Empfangen des Updates im Schritt S3 kann dieses gegebenenfalls entschlüsselt werden. Nach dem Schreiben, beziehungsweise Installieren des Updates in den ersten Speicherbereich im Schritt S5 kann wiederum der Erfolg der Aktualisierung im Schritt S7 überprüft werden. War die Aktualisierung nicht erfolgreich, wird nun ein einem Schritt S31 eine statische Netzwerkadresse aus dem sechsten Speicherbereich 41-6 ausgelesen und die Vorrichtung 1 kann über die Datenschnittstelle 11 unter Verwendung der statischen Netzwerkadresse mit der externen Einheit 51 verbunden werden. Mittels der externen Einheit 51 kann nun der Schritt S9 initialisiert werden und das zweite Wiederherstellungsprogramm 73 zur Aktualisierung des ersten Wiederherstellungsprogramms 71 ausgeführt werden. Nach dem Schreiben/Installieren des Updates in den ersten Speicherbereich 31-1 kann wiederum der Erfolg überprüft und die Vorrichtung 1 optional neugestartet werden. Zum Neustarten der Vorrichtung 1 kann jeweils ein Schritt zum Lesen und Ausführen eines Bootloaders vorgesehen sein, wobei der Bootloader in dem vierten Speicherbereich 41-4 hinterlegt ist.

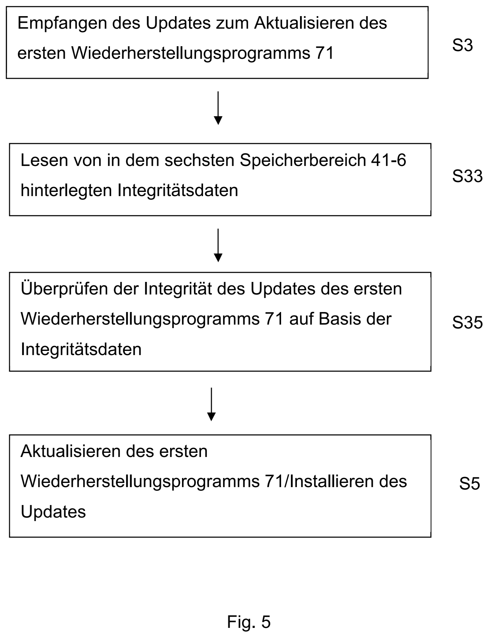

Die Figur 5 illustriert weitere optionale Aspekte des Verfahrens. Um eine besonders hohe Sicherheit zu erreichen, ist es hier vorgesehen, dass im Schritt S3 über die Datenschnittstelle 11 empfangene Update des ersten Wiederherstellungsprogramms 71 auf seine Integrität zu überprüfen. Zu diesem Zweck werden in einem Schritt S33 Integritätsdaten, wie Signaturdaten und/oder Hashwerte, aus dem sechsten Speicherbereich 41-6 gelesen. In einem Schritt S35 wird auf Basis der gelesenen Integritätsdaten die Integrität des empfangenen Updates des ersten Wiederherstellungsprogramms 71 überprüft. Nur dann, wenn die Integrität bestätigt werden kann, wird der Schritt S5 zum Schreiben/Installieren des Updates des ersten Wiederherstellungsprogramms 71 in den ersten Speicherbereich 31-1 durchgeführt.

### Bezugszeichenliste

- 1: Vorrichtung
- 3: Leiterplatte
- 5: Steuerschaltung
- 7: Lichtsendeeinheit
- 9: Photodetektor
- 11: Datenschnittstelle
- 17: Netzwerk
- 19: Steuereinheit
- 21: Recheneinheit
- 23: flüchtiger Datenspeicher
- 31: erster Datenspeicher
- 41: zweiter Datenspeicher
- 51: externe Einheit
- 53: Internet der Dinge (IoT)
- 71: erstes Wiederherstellungsprogramm
- 73: zweites Wiederherstellungsprogramm
- 75: Firmware
- 77: Bootloader

## Patentansprüche

1. Verfahren zum Aktualisieren eines in einem ersten Speicherbereich (31-1) eines nicht-flüchtigen ersten Datenspeichers (31) hinterlegten ersten Wiederherstellungsprogramms (71) einer Vorrichtung (1) mit einer Datenschnittstelle (11), das Verfahren umfassend:
- einen Schritt S1 zum Ausführen des ersten Wiederherstellungsprogramms (71);
- einen Schritt S3 zum Empfangen eines Updates des ersten Wiederherstellungsprogramms (71) über die Datenschnittstelle (11) der Vorrichtung (1) mittels des ersten Wiederherstellungsprogramms (71);
- einen Schritt S5 zum Aktualisieren des ersten Wiederherstellungsprogramms (71), umfassend das Installieren des Updates in den ersten Speicherbereich (31-1);
- einen Schritt S7 zum Überprüfen eines Erfolgs der Aktualisierung des ersten Wiederherstellungsprogramms (71);
- einen Schritt S9 zum Ausführen eines in einem fünften Speicherbereich (41-5) eines zweiten Datenspeichers (41) hinterlegten zweiten Wiederherstellungsprogramms (73) zur Wiederherstellung oder Aktualisierung des ersten Wiederherstellungsprogramms (71), falls die Überprüfung ergibt, dass die Aktualisierung mittels des ersten Wiederherstellungsprogramms (71) nicht erfolgreich war.

2. Verfahren nach Anspruch 1, wobei dann, wenn im Schritt S7 festgestellt wurde, dass die Aktualisierung nicht erfolgreich war, vor dem Schritt S7 zum Ausführen des zweiten Wiederherstellungsprogramms (73) zuerst versucht wird, die Schritte S1, S3, S5 und S7 erneut auszuführen und der Schritt S9 nur in dem Fall ausgeführt wird, wenn wiederholt festgestellt wird, dass die Aktualisierung nicht erfolgreich war.

3. Verfahren nach einem der Ansprüche 1 oder 2, wobei die Vorrichtung (1) nach einer Aktualisierung des ersten Wiederherstellungsprogramms (71) neugestartet wird und wobei das Neustarten das Ausführen eines in einem vierten Speicherbereich (41-4) des zweiten Datenspeichers (41) hinterlegten Bootloaders umfasst.

4. Verfahren nach einem der vorangehenden Ansprüche, umfassend das Lesen einer in einem dritten Speicherbereich (31-3a) des ersten Datenspeichers (31) hinterlegten dynamischen Netzwerkadresse zur Authentifizierung in einem Netzwerk.

5. Verfahren nach einem der vorangehenden Ansprüche, wobei zum Ausführen des in dem fünften Speicherbereich (41-5) hinterlegten zweiten Wiederherstellungsprogramms (73) eine in einem sechsten Speicherbereich (41-6) des zweiten Datenspeichers (41) hinterlegte statische Netzwerkadresse durch die Vorrichtung (1) ausgelesen und zur Adressierung der Vorrichtung (1) über die Datenschnittstelle (11) verwendet wird, wobei das Ausführen des zweiten Wiederherstellungsprogramms (73) über eine andere Adressierung der Vorrichtung (1) unterbunden wird.

6. Verfahren nach einem der vorangehenden Ansprüche, umfassend
- den Aufbau einer verschlüsselten Datenverbindung über die Datenschnittstelle (11), wobei in dem sechsten Datenspeicher (41-6) hinterlegte Verschlüsselungsdaten durch die Vorrichtung (1) ausgelesen und zum Aufbau der Datenverbindung verwendet werden; und/oder umfassend
- das Verschlüsseln des Updates des ersten Wiederherstellungsprogramms, das Übertragen des verschlüsselten Updates über die Datenschnittstelle (11) an die Vorrichtung (1) und das entschlüsseln des Updates durch die Vorrichtung (1).

7. Verfahren nach einem der vorangehenden Ansprüche, umfassend das Verifizieren der Integrität des im Schritt S3 empfangenen Updates des ersten Wiederherstellungsprogramms (71), wobei Signaturdaten aus dem sechsten Speicherbereich (41-6) gelesen und die Integrität des Updates des ersten Wiederherstellungsprogramms (71) auf Basis der Signaturdaten überprüft wird.

8. Vorrichtung (1) umfassend eine Datenschnittstelle (11), eine Steuerschaltung (5) mit einer Recheneinheit (21), einen nicht-flüchtigen ersten Datenspeicher (31) und einen nicht-flüchtigen zweiten Datenspeicher (41), wobei der erste Datenspeicher (31) einen ersten Speicherbereich (31-1) und einen zweiten Speicherbereich (31-2) umfasst, wobei der zweite Datenspeicher (41) einen fünften Speicherbereich (41-5) umfasst; wobei
- in dem ersten Speicherbereich (31-1) ein ausführbares erstes Wiederherstellungsprogramm (71) hinterlegt ist;
- in dem zweiten Speicherbereich (31-2) eine ausführbare Firmware zum Betreiben der Vorrichtung (1) hinterlegt ist;
- in dem fünften Speicherbereich (41-5) ein zweites Wiederherstellungsprogramm (73) hinterlegt ist; und wobei
die Vorrichtung (1) dazu ausgebildet und eingerichtet ist zum Aktualisieren des ersten Wiederherstellungsprogramms (71) ein Update des ersten Wiederherstellungsprogramms (71) über die Datenschnittstelle (11) zu empfangen, in den ersten Datenspeicher (31) zu installieren und einen Erfolg der Aktualisierung zu überprüfen,
sowie das zweite Wiederherstellungsprogramm (73) zum Wiederherstellen oder Aktualisieren des ersten Wiederherstellungsprogramms (71) auszuführen, falls die Überprüfung ergibt, dass die Aktualisierung nicht erfolgreich war.

9. Vorrichtung (1) nach Anspruch 8, wobei der zweite Datenspeicher (41) einen vierten Speicherbereich (41-4) umfasst, in welchem ein Bootloader (77) zum Starten des ersten Wiederherstellungsprogramm (71), des zweiten Wiederherstellungsprogramms (73), und der Firmware (75) hinterlegt ist.

10. Vorrichtung (1) nach Anspruch 8 oder 9, wobei der zweite Datenspeicher (41) einen sechsten Speicherbereich (41-6) umfasst, welcher durch einen Anwender und/oder durch die Firmware nicht veränderlich ist und in welchem wenigstens eine der folgenden Daten hinterlegt sind: Signaturdaten zum Überprüfen der Integrität des Updates, Verschlüsselungsdaten zum Verschlüsseln der Kommunikation über die Datenschnittstelle(11), wenigstens ein statischer Adressparameter zur Adressierung der Vorrichtung (1).

11. Vorrichtung (1) nach einem der Ansprüche 8 bis 10, wobei der erste Datenspeicher (31) einen dritten Speicherbereich (31-3) umfasst und wobei die Vorrichtung (1) dazu ausgebildet und eingerichtet ist ein dynamische Netzwerkadresse in dem dritten Speicherbereich (31-3) zu hinterlegen und auszulesen.

12. Vorrichtung (1) nach einem der Ansprüche 8 bis 11, wobei der erste Datenspeicher (31) einen NAND-Datenspeicher, insbesondere einen eMMC-Datenspeicher, und der zweite Datenspeicher (41) einen NOR-Datenspeicher umfasst.

13. Vorrichtung (1) nach einem der Ansprüche 8 bis 12, welche als Feldgerät, loT-Gerät oder als eingebettetes System ausgebildet ist.

14. Vorrichtung (1) nach einem der Ansprüche 8 bis 13, welches zum Durchführen eines Verfahrens nach einem der Ansprüche 1 bis 6 ausgebildet und eingerichtet ist.
